(19) Europäisches Patentamt
European Patent Office
Office européen des brevets

(11) Veröffentlichungsnummer: **0 038 006**
**B1**

# (12) EUROPÄISCHE PATENTSCHRIFT

(45) Veröffentlichungstag der Patentschrift: **21.12.83**

(51) Int. Cl.³: **C 08 G 65/48**, C 08 G 85/00, C 08 K 5/01

(21) Anmeldenummer: **81102595.6**

(22) Anmeldetag: **07.04.81**

(54) **Verfahren zur Molekulargewichtserhöhung von Polykondensaten und Verwendung der erhaltenen Produkte als Füllstoffe für Polyester, Polyamide oder Styrolpolymerisate.**

(30) Priorität: **11.04.80 DE 3013926**

(43) Veröffentlichungstag der Anmeldung: **21.10.81 Patentblatt 81/42**

(45) Bekanntmachung des Hinweises auf die Patenterteilung: **21.12.83 Patentblatt 83/51**

(84) Benannte Vertragsstaaten: **BE DE FR GB NL**

(56) Entgegenhaltungen: **US - A - 3 313 776**

(73) Patentinhaber: **BASF Aktiengesellschaft, Carl-Bosch-Strasse 38, D-6700 Ludwigshafen (DE)**

(72) Erfinder: **Brandstetter, Franz, Dr., Ritterbuechel 45, D-6730 Neustadt (DE)**
Erfinder: **Haaf, Franz, Dr., Leistadter Strasse 9, D-6702 Bad Duerkheim 1 (DE)**
Erfinder: **Naarmann, Herbert, Dr., Haardtblick 15, D-6719 Wattenheim (DE)**
Erfinder: **Schuster, Hans, H. Dr., Luitpoldstrasse 166, D-6700 Ludwigshafen (DE)**

**EP 0 038 006 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Molekulargewichtserhöhung von Polykondensaten und Verwendung der erhaltenen Produkte als Füllstoffe für Polyester, Polyamide oder Styrolpolymerisate

Die Erfindung betrifft ein Verfahren zur Erhöhung des Molekulargewichts niedermolekularer Polykondensate mit $-CH_3$-, $=CH_2$- oder $\equiv CH$-Seitengruppen im Molekül und mit Intrinsic Viskositäten $[\eta]$, gemessen bei 25°C in Chloroform, von 0,45 dl/g oder kleiner zu höhermolekularen Polykondensaten mit Intrinsic Viskositäten von 0,52 dl/g oder größer durch oxidative Kupplung.

Bei einer derartigen Erhöhung des Molekulargewichts erhält man aus den technisch leicht zugänglichen niedermolekularen Verbindungen Stoffe, die wegen ihres höheren Molekulargewichts als Füll- und Verstärkerstoffe in der Polymerchemie Verwendung finden können.

Es ist bekannt, bei Polykondensaten mit $-CH_3$- $=CH_2$- oder $\equiv CH$-Seitengruppen im Molekül mit Hilfe von Dehydrierungsmitteln, z. B. von organischen Peroxiden, das Molekulargewicht zu erhöhen (z. B. US-A-331 776. Bei Polykondensaten, die einer derartigen oxidativen Kupplung zugänglich sind, ist die Reaktionszeit die entscheidende Bedingung zur Beeinflussung des Molekulargewichts (vgl. Stanford Research Report 86, Seite 153, »General Reaction Conditions).

Nachteilig ist bei den bekannten Verfahren jedoch, daß einer längeren Reaktionszeit auch eine längere Einwirkung der oder des Oxidationsmittels parallel verläuft. Das bedeutet mit zunehmender Reaktionszeit auch eine zunehmende unerwünschte Oxidation, z. B. von Methylseitengruppen im Poly-[-2,6-Dimethylphenylenoxid] zu Methylolgruppen. Diese Methylolgruppen sind reaktive Seitengruppen, die unter Wasserabspaltung zu Äthern vernetzen und eine nachteilige Mechanik des Polymeren in bezug auf Verfärbung und Sprödigkeit ergeben.

Der Erfindung liegt die Aufgabe zugrunde, die oben erwähnten Nachteile zu vermeiden und höhermolekulare Polykondensate mit guten Sprödigkeitseigenschaften zu erhalten, ohne daß diese verfärbt sind.

Diese Aufgabe wird erfindungsgemäß dadurch gelöst, daß die niedermolekularen Polykondensate mit $-CH_3$-, $=CH_2$- oder $\equiv CH$-Seitengruppen im Molekül in Gegenwart einer H-aciden Verbindung im Gewichtsverhältnis oder 1 : 1 mehr, bezogen auf das Polykondensat und in Gegenwart eines Dehydrierungsmittels in Mengen von 0,1 bis 100 Gewichtsprozent, bezogen auf die H-acide Verbindung, 0,5 bis 10 Stunden lang auf 100 bis 250° erhitzt wird.

Nach bevorzugtem Verfahren werden als H-acide Verbindungen Stoffe der allgemeinen Formel (I):

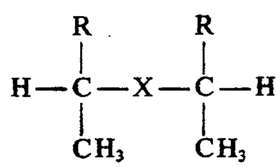

(I)

worin

R = $CH_3$ oder $C_2H_5$ und

X = aromatisches System, bevorzugt

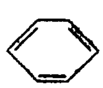

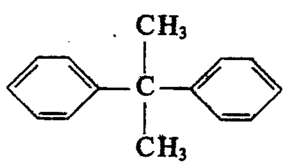

oder

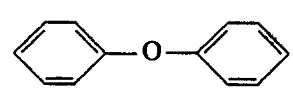

ist, verwendet. Besonders bevorzugt ist Diisopropylbenzol. Bevorzugt sind auch Verfahren, bei denen die Menge der H-aciden Verbindung 1 : 1, bezogen auf das Gewicht des Polykondensats, beträgt und zusätzlich nach 1 bis 60 Gew.-% eines Lösungsmittels, bezogen auf das Gewicht des Polykondensats, verwendet werden.

Das Dehydrierungsmittel, welches bevorzugt ein organisches Peroxid, besonders bevorzugt Di-tert.-butylperoxid ist, wird zweckmäßig in Mengen von 1 bis 10 Gewichtsprozent, bezogen auf die H-acide Verbindung (I), eingesetzt.

Die Reaktionsmischung soll bei dem erfindungsgemäßen Verfahren vorzugsweise auf 160 bis 180°C erhitzt werden und die Dauer der Erhitzung soll bevorzugt 1 bis 2 Stunden sein.

Als Polykondensate, die für das erfindungsgemäße Verfahren in Frage kommen, sind alle Polymeren mit $-CH_3$-, $=CH_2$- oder $\equiv CH$-Seitengruppen geeignet, die in der Lage sind, mit der H-aciden Verbindung (I) und dem Dehydrierungsmittel unter H-Eliminierung zu kuppeln. In Frage kommt insbesondere Poly-(2,6-dimethylphenylenoxid).

Die Herstellung dieser Verbindungen ist wohl bekannt und beispielsweise beschrieben in den Literaturstellen: DE-OS 2 913 204, DE-AS 2 011 711 oder Macromolecular Synthesis 1 (1977) Seiten 501, 509, 575, 563, 659 oder 639.

Die oxidative Kupplungsreaktion ist deutlich feststellbar durch das Messen der Intrinsic Viskosität $[\eta]$ in dl/g bei 25° C in Chloroform und äußert sich in einer Erhöhung des $[\eta]$-Wertes von 0,45 dl/g oder kleiner vor der Reaktion auf 0,52 oder größer nach der Kupplungsreaktion. Zum Zusammenhang zwischen Intrinsic Viskosität und Molgewicht vgl. Synthesis 1 (1977), Seite 82.

Unter H-aciden Verbindungen werden Verbindungen verstanden, welche Isopropyl bzw. sek.-Butylgruppen oder auch durch $-CN$ oder Estergruppen substituierte

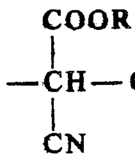 Gruppen

enthalten.

Beschrieben sind derartige H-acide Verbindungen in Angew. Chem. 76 (1964), Nr. 3, S. 129.

Die H-aciden Verbindungen werden in Mengen eingesetzt, daß sich ihr Gewicht zum Gewicht des Polykondensats mindestens wie 1 : 1 verhält. Es ist auch möglich, im Überschuß der H-aciden Verbindung zu arbeiten. Das ist z. B. dann der Fall, wenn die H-acide Verbindung gleichzeitig als Lösungsmittel verwendet wird. Als H-acide Verbindungen werden bevorzugt Stoffe der allgemeinen Formel (I) verwendet:

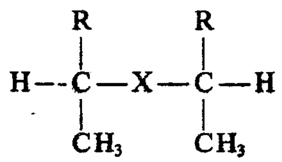

(I)

worin

R $= CH_3$ oder $C_2H_5$ und

X ein aromatisches System, bevorzugt

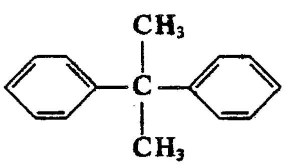 oder 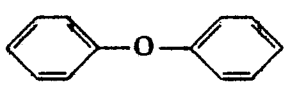

ist. Besonders bevorzugt als H-acide Verbindung ist das Diisopropylbenzol. Es ist von Vorteil, daß die Gewichtsmenge der H-aciden Verbindung dem Gewicht des Polykondensats gleich ist und zusätzlich 1 bis 60 Gewichtsprozent eines Lösungsmittels, bezogen auf das Gewicht des Polykondensats, verwendet werden. Als Lösungsmittel sind z. B. Toluol, Cyclohexan, Oktan, Tetrahydrofuran, Essigsäureäthylester oder Dioxan geeignet.

Außer der H-aciden Verbindung müssen übliche Dehydrierungsmittel in Mengen von 0,1 bis 100, bevorzugt 1 bis 10 Gewichtsprozent, bezogen auf die H-acide Verbindung (I) bei der oxidativen Kupplungsreaktion zugegen sein. Bevorzugte Dehydrierungsmittel sind organische Peroxide, besonders bevorzugt ist das Di-tert.-butylperoxid.

Zur Durchführung der Reaktion wird die Reaktionslösung 0,5 bis 10, bevorzugt 1 bis 2 Stunden lang auf 100 bis 250, bevorzugt 160 bis 180° C erhitzt. Die Dosierung des Dehydrierungsmittels erfolgt im Verlauf der 0,5 bis 10, bevorzugt 1 bis 2 Stunden. Bei dem erfindungsgemäßen Verfahren erfolgt unter den oben angegebenen Reaktionsbedingungen mit Hilfe der H-aciden Verbindung eine Kupplung der niedermolekularen Polykondensate unter Einbau der H-aciden Verbindung (I) in das Polykondensat.

Das erfindungsgemäße Verfahren erlaubt, die Synthese von neuartig verbrückten höhermolekularen Polykondensate, die als Füllstoffe und Verstärkerkunststoffe, z. B. Polyester, Polyamide und/oder Polystyrole oder Polystyrolcopolymerisate Verwendung finden. Außerdem ist es möglich, bei diesem Verfahren mit niederviskosen, leicht zu reinigenden Polykondensatlösungen zu arbeiten, die erst durch den Verknüpfungsschritt höherviskos werden und dann direkt als Lösungen den zu vergütenden Polymerisaten, die ebenfalls gelöst sein können, zufügt.

Auch ist es möglich, die nach dem erfindungsgemäßen Verfahren hergestellten Polykondensate, nach der Aufarbeitung z. B. durch Fällen und Trocknung in Monomeren z. B. Styrol zu lösen und dann der Weiterverarbeitung zuzuleiten.

Die in den Beispielen genannten Teile sind Gewichtsteile

Beispiel 1 – 5

Das in Toluol mit CU[I] Br/Dibutylamin hergestellte Poly-[2,6-dimethylphenylenoxid] (PPO) hat eine Intrinsic Viskosität [$\eta$] von 0,45 dl/g. 400 Teile der Toluollösung des PPO (25 Gew.-%) werden auf 170° C erhitzt und wird dann im Verlauf von 10 Minuten das Diisopropylbenzol – in diesem Fall 100 Teile – eindosiert. Die Zugabe von 10 Teilen Di-tert.-butylperoxid erfolgt im Verlauf von 30 Minuten.

Dann läßt man abkühlen, fällt die Lösung in Methanol und erhält nach dem Trocknen bei 50° C und 5 Torr ca. 100 g eines modifizierten PPO mit einer Intrinsic Viskosität von 0,52 dl/g.

Wird wie oben beschrieben gearbeitet, jedoch die Mengenverhältnisse variiert, so ergeben sich die folgenden in der Tabelle 1 zusammengestellten Resultate.

| Nr. | Diisopropylbenzol-Menge<br>Teile | Ditertiärbutyl-peroxid<br>Teile | d l/g |
|---|---|---|---|
| 2 | 100 | 20 | 0,56 |
| 3 | 100 | 30 | 0,62 |
| 4 | 100 | 40 | 0,70 |
| 5 | wie 1 aber statt Toluol Diisopropylbenzol<br>350 | 10 | 0,68 |

Beispiel 6

Wird wie im Beispiel 5 beschrieben gearbeitet, jedoch ein Ausgangs-PPO mit der Intrinsic Viskosität [$\eta$] 0,34 dl/g eingesetzt, so erhält man unter sonst gleichen Bedingungen ein modifiziertes Produkt mit einer Intrinsic Viskosität [$\eta$] von 0,58 dl/g.

**Patentansprüche**

1. Verfahren zur Erhöhung des Molekulargewichts niedermolekularer Polykondensate mit $-CH_3$-, $=CH_2$- oder $\equiv CH$-Seitengruppen im Molekül und mit Intrinsic Viskositäten [$\eta$], gemessen bei 25° C in Chloroform, von 0,45 dl/g oder kleiner zu höhermolekularen Polykondensaten mit Intrinsic Viskositäten von 0,52 dl/g oder größer durch oxidative Kupplung, dadurch gekennzeichnet, daß die niedermolekularen Polykondensate in Gegenwart einer H-aciden Verbindung im Gewichtsverhältnis 1 : 1 oder mehr, bezogen auf das Polykondensat und in Gegenwart eines Dehydrierungsmittels in Mengen von 0,1 bis 100 Gewichtsprozent, bezogen auf die H-acide Verbindung, 0,5 bis 10 Stunden lang auf 100 bis 250° C erhitzt werden.

2. Verfahren nach Anspruch 1, dadurch gekennzeichnet, daß die H-aciden Verbindungen Stoffe der allgemeinen Formel (I) sind:

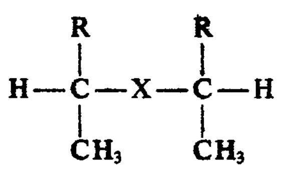

(I)

worin

R = $CH_3$ oder $C_2H_5$ und

X = aromatisches System.

3. Verfahren nach Anspruch 1, dadurch gekennzeichnet, daß die H-aciden Verbindungen Stoffe der allgemeinen Formel (I) sind:

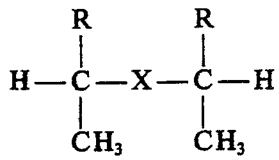

(I)

**worin**

R = $CH_3$ oder $C_2H_5$ und

X =

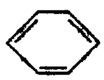 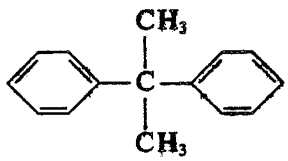 oder 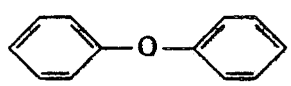

4. Verfahren nach Anspruch 1, dadurch gekennzeichnet, daß die Menge der H-aciden Verbindung im Gewichtsverhältnis 1 : 1, bezogen auf das Gewicht des Polykondensats, beträgt und zusätzlich 1 bis 60 Gewichtsprozent eines Lösungsmittels, bezogen auf das Gewicht des Polykondensats, verwendet werden.

5. Verfahren nach Anspruch 1, dadurch gekennzeichnet, daß das Dehydrierungsmittel in Mengen von 1 bis 10 Gewichtsprozent, bezogen auf die H-acide Verbindung, eingesetzt wird.

6. Verfahren nach Anspruch 1, dadurch gekennzeichnet, daß das Dehydrierungsmittel ein organisches Peroxid ist.

7. Verfahren nach Anspruch 1, dadurch gekennzeichnet, daß die Reaktionsmischung auf 160 bis 200° C erhitzt wird.

8. Verfahren nach Anspruch 1, dadurch gekennzeichnet, daß die Reaktionsmischung 1 bis 2 Stunden lang erhitzt wird.

9. Verwendung der nach Anspruch 1 hergestellten höhermolekularen Polykondensate als Füllstoffe für Polyester, Polyamide oder Styrolpolymerisate.

## Claims

1. A process for increasing the molecular weight of low molecular weight polycondensates having lateral $-CH_3$, $=CH_2$ or $\equiv CH$ groups in the molecule and an intrinsic viscosity $[\eta]$, measured at 25° C in chloroform, of 0.45 dl/g or less, to give higher molecular weight polycondensates having an intrinsic viscosity of 0.52 dl/g or more, by oxidative coupling, wherein the low molecular weight polycondensates are heated for 0.5 to 10 hours at 100 to 250° C in the presence of an H-acidic compound in a weight ratio of 1 : 1 or more, based on the polycondensate, and in the presence of a dehydrating agent in an amount of from 0.1 to 100% by weight, based on the H-acidic compound.

2. A process as claimed in claim 1, wherein the H-acidic compound is a substance of the general formula (I)

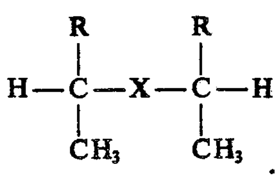

(I)

where

R is $CH_3$ or $C_2H_5$, and

X is an aromatic system.

**3. A process as claimed in claim 1, wherein the H-acidic compound is a substance of the general formula (I)**

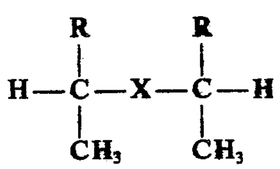

(I)

where

R is $CH_3$ or $C_2H_5$, and

X is

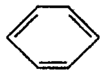 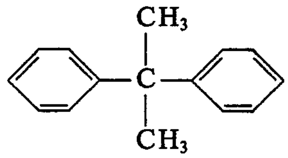 or 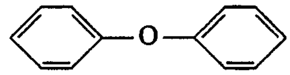

4. A process as claimed in claim 1, wherein the weight ratio of the H-acidic compound to the polycondensate is 1 : 1, and 1 to 60% by weight of a solvent, based on the weight of the polycondensate, is additionally employed.

5. A process as claimed in claim 1, wherein the dehydrating agent is used in an amount of from 1 to 10% by weight, based on the H-acidic compound.

6. A process as claimed in claim 1, wherein the dehydrating agent is an organic peroxide.

7. A process as claimed in claim 1, wherein the reaction mixture is heated at 160 to 200° C.

8. A process as claimed in claim 1, wherein the reaction mixture is heated for 1 to 2 hours.

9. The use of the higher molecular weight polycondensates, produced as claimed in claim 1, as fillers for polyesters, polyamides or styrene polymers.

**Revendications**

1. Procédé pour l'augmentation du poids moléculaire de produits de polycondensation de faible poids moléculaire, contenant des groupes latéraux $-CH_3$, $=CH_2$ ou $\equiv CH$ dans la molécule et ayant des viscosités intrinsèques $[\eta]$, mesurées à 25° C dans le chloroforme, de 0,45 dl/g ou moins, pour obtenir des produits de polycondensation de poids moléculaire plus élevé, ayant des viscosités intrinsèques de 0,52 dl/g ou plus, par copulation par oxydation, caractérisé en ce que les produits de polycondensation de faible poids moléculaire sont chauffés pendant une durée de 0,5 à 10 heures, à une température de 100 à 250° C, en présence d'un composé H-acide dans le rapport de poids 1 : 1 ou plus par rapport au produit de polycondensation, et en présence d'un agent de déshydrogénation dans des proportions de 0,1 à 100% en poids par rapport au composé H-acide.

2. Procédé selon la revendication 1, caractérisé en ce que les composés H-acides sont des substances de formule générale (I)

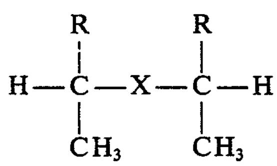 (I)

dans laquelle

R = $CH_3$ ou $C_2H_5$ et

X = système aromatique.

3. Procédé selon la revendication 1, caractérisé en ce que les composés H-acides sont des substances de formule générale (I)

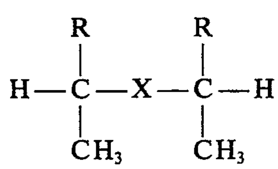 (I)

dans laquelle

R = $CH_3$ ou $C_2H_5$ et

X =

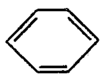

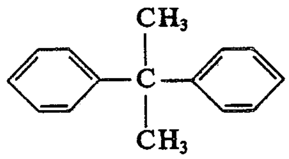

ou

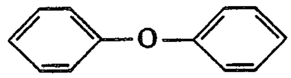

4. Procédé selon la revendication 1, caractérisé en ce que la quantité du composé H-acide est dans le rapport de poids 1 : 1 par rapport au poids du produit de polycondensation, et en ce qu'on utilise en plus 1 à 60% en poids d'un solvant, par rapport au poids du produit de polycondensation.

5. Procédé selon la revendication 1, caractérisé en ce que l'agent de déshydrogénation est utilisé dans des proportions de 1 à 10% en poids, par rapport au composé H-acide.

6. Procédé selon la revendication 1, caractérisé en ce que l'agent de déshydrogénation est un peroxyde organique.

7. Procédé selon la revendication 1, caractérisé en ce que le mélange réactionnel est chauffé à une température de 160 à 200° C.

8. Procédé selon la revendication 1, caractérisé en ce que le mélange réactionnel est chauffé pendant 1 à 2 heures.

9. Utilisation des produits de polycondensation de poids moléculaire élevé, préparés suivant la revendication 1, comme matières de charge pour des polyesters, des polyamides ou des polymères du styrène.